# FASCICULE DE BREVET EUROPEEN

(11) **EP 1 972 068 B1**
(45) Date de publication et mention de la délivrance du brevet: **19.10.2016**
(21) Numéro de dépôt: 07717916.6
(22) Date de dépôt: 09.01.2007
(51) Int. Cl.: H04B 1/69

(54) **PROCÉDÉ DE DÉTECTION DE SYMBOLES ET RÉCEPTEUR ASSOCIÉ**
VERFAHREN ZUR SYMBOLDETEKTION SOWIE ENTSPRECHENDER EMPFÄNGER
METHOD FOR THE DETECTION OF SYMBOLS AND ASSOCIATED RECEIVER

(30) Priorité: 10.01.2006 FR 0600195
(43) Date de publication de la demande: 24.09.2008
(73) Titulaire: Orange, 75015 Paris (FR)
(72) Inventeur: MISCOPEIN, Benoît, F-38000 Grenoble (FR); SCHWOERER, Jean, F-38000 Grenoble (FR)
(74) Mandataire: Cabinet Plasseraud
(86) Numéro de dépôt international: PCT/FR2007/000033
(87) Numéro de publication internationale: WO 2007/080311

(56) Documents cités:
- MOE Z WIN ET AL: "Impulse Radio: How It Works" IEEE COMMUNICATIONS LETTERS, IEEE SERVICE CENTER, PISCATAWAY, NJ, US, vol. 2, no. 2, février 1998 (1998-02), XP011010556 ISSN: 1089-7798
- YI-LING CHAO ET AL: "Weighted correlation receivers for ultra-wideband transmitted reference systems" GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, vol. 1, 29 novembre 2004 (2004-11-29), pages 66-70, XP010758855 ISBN: 0-7803-8794-5
- GUVENC, SAHINOGLU: "Threshold-Based TOA Estimation for Impulse radio UWB Systems" MITSHUBISHI ELECTRIC RESEARCH LABORATORIES, [Online] décembre 2005 (2005-12), pages 1-6, XP002394950 Extrait de l'Internet: URL:http://www.merl.com/papers/docs/TR2005 -026.pdf> [extrait le 2006-08-16]

## Description

La présente invention concerne la détection de symboles par un récepteur.

Elle concerne plus particulièrement la détection de symboles transmis par un émetteur sous la forme d'une succession d'impulsions.

La détection d'une impulsion dans un signal bruité est une problématique ancienne, qui se posait déjà dans le domaine des radars.

Dans ce cadre, on peut citer le détecteur à taux d'alarme constant (CFAR, pour "Constant False Alarm Rate"). Il consiste à déterminer le nombre maximal de déclenchements sur des pics de bruit (fausses alarmes) que le système peut tolérer tout en satisfaisant les performances attendues. Alors que seul le bruit est présent, le récepteur exécute une phase de calibration durant laquelle il détermine, par dichotomie, le seuil correspondant à ce nombre maximal de fausses alarmes. La valeur de seuil ainsi obtenue correspond à la meilleure sensibilité de détection possible pour un taux d'erreur fixé.

La méthode du détecteur CFAR donne des résultats intéressants, mais elle souffre de certains inconvénients directement liés à son principe.

Tout d'abord, elle pose un taux d'erreur plancher. Le récepteur positionne en effet son seuil pour obtenir le nombre de fausses alarmes, donc d'erreurs, demandé et ce, quelles que soient les conditions de liaison. De ce fait, le récepteur est incapable d'exploiter de très bonnes conditions, ce qui limite ses performances. Ensuite, les fausses alarmes représentent la grande majorité des erreurs. Ce déséquilibre doit être compensé par un système de codage correcteur d'erreurs. Enfin, la calibration du seuil peut être complexe. Il peut par exemple être nécessaire de déconnecter l'antenne du récepteur pour s'assurer de l'absence de tout signal pendant sa calibration. La calibration du seuil ne peut donc se faire que rarement et en dehors de toute phase de communication.

Une autre méthode connue pour détecter des impulsions consiste à chercher un nombre fixe de déclenchements sur le signal utile. Cette méthode particulièrement simple repose sur la connaissance du nombre d'impulsions transmises par intervalle de temps. Le seuil de détection est d'abord fixé à une valeur élevée, puis est abaissé d'une valeur déterminée à chaque itération, jusqu'à ce qu'il permette la détection du nombre d'impulsions attendu. Ainsi, si un signal transmis comporte huit impulsions par temps-symbole, le système aura pour but d'obtenir huit déclenchements par temps-symbole.

Cette méthode est relativement peu efficace du fait que le nombre d'impulsions par intervalle de temps n'est pas toujours connu à l'avance par le récepteur et peut en outre varier en fonction des conditions de liaison et du canal radio (nombre d'échos par exemple).

Par ailleurs, le problème de la détection d'impulsions se pose également dans des systèmes utilisant la récente technologie radio ultra large bande (UWB, pour "Ultra Wide Band").

Cette technologie émergente n'utilise pas de fréquence porteuse permanente. Au lieu de moduler un signal support, l'information à transmettre est émise directement en utilisant des impulsions de très courte durée (entre quelques centaines de picosecondes et quelques nanosecondes) et donc de très grande largeur de bande (plusieurs GHz). Comme la puissance - relativement faible - de ces impulsions est étalée sur toute cette bande, la densité spectrale de puissance du signal est très faible.

Ainsi, un signal UWB impulsionnel n'est pas un signal continu, mais un train d'impulsions très brèves et de très faible rapport cyclique.

L'accès multiple est couramment réalisé en faisant des sauts temporels (Time Hopping) régis par une séquence pseudo-aléatoire. L'information peut être modulée en jouant sur l'amplitude, la forme ou encore le retard des impulsions. La séquence de saut, quant à elle, constitue une caractéristique, ou "signature", d'un émetteur.

Chaque impulsion doit ensuite être détectée par le récepteur, ce qui peut se faire soit par une détection synchrone (cohérente ou par corrélation), soit par une détection quadratique. Mais dans tous les cas, il faut ensuite examiner le résultat de la détection pour décider, suivant l'amplitude du signal ou du taux de corrélation obtenu, de l'absence ou de la présence d'une impulsion.

La détection d'une succession d'impulsions peut alors permettre de décider de la valeur d'un symbole reçu correspondant.

Les premiers récepteurs UWB utilisés reposaient sur un principe de détection des impulsions par corrélation synchrone. Dans ces récepteurs, c'est le taux de corrélation obtenu qui est comparé à un seuil pour la prise de décision. Du fait du caractère synchrone de ces récepteurs, le bon ajustement du seuil est relativement peu critique dans ce cas. En revanche, la détection des impulsions est bien plus problématique s'agissant des nouveaux récepteurs non cohérents, basés sur la détection d'énergie ou d'amplitude.

Lorsque la détection des impulsions est peu performante, on ne peut alors espérer détecter efficacement un ou plusieurs symboles transmis sous la forme d'une succession de telles impulsions.

Par exemple, lorsqu'on cherche à détecter la présence ou l'absence d'une impulsion dans un intervalle de temps donné, par comparaison d'une énergie ou amplitude mesurée sur cet intervalle de temps avec un seuil de détection, les performances de la détection et de la prise de décision qui s'ensuit sur la valeur du symbole transmis dépendent largement du positionnement de ce seuil. Or, le choix d'une valeur adéquate pour ce seuil n'est pas forcément aisé, d'autant que la valeur optimale peut varier en fonction des conditions radio notamment.

Des exemples possibles et des modes de réalisation de l'art antérieur peuvent être trouvés dans les documents : Moe et al: "Impulse Radio: How It Works" IEEE Communications Letters, IEEE Service Center, vol. 2, no. 2, février 1998, Yi-Ling et al: "Weighted correlation receivers for uttra-wideband transmitted reference systems" Global Telecommunications Conference, 2004. Globecom '04, IEEE, vol. 1, 29.11.2004, pages 66-70 ou encore Guvenc, Sahinoglu: "Threshold-Based TOA Estimation for Impulse radio UWB Systems" Mitshubishi Electric Research Laboratories, décembre 2005, pages 1-6 : http://www.merl.com/papers/docs/TR2005 -026.pdf.

Un but de la présente invention est d'obtenir une détection de symboles performante.

Un autre but de l'invention est d'obtenir une détection de symboles performante, même lorsque la détection des impulsions successives formant ces symboles est relativement peu efficace. En particulier, la détection de symboles devrait être performante, même lorsque le seuil de détection utilisé pour détecter les impulsions est temporairement ou durablement inadapté.

Un autre but de l'invention est de permettre une détection de symboles dans un système de type UWB, et plus particulièrement à l'aide d'un récepteur non cohérent.

L'invention propose ainsi un procédé de détection de symboles par un récepteur, chaque symbole étant transmis depuis un émetteur sous la forme d'une succession d'impulsions représentant une séquence prédéterminée de valeurs numériques, les valeurs numériques ayant des poids nominaux respectifs au sein de chaque séquence prédéterminée. Le procédé comprend les étapes suivantes :
- recevoir, au récepteur, une succession d'impulsions correspondant sensiblement à un symbole transmis depuis l'émetteur ;
- déterminer une séquence de valeurs numériques correspondant à ladite succession d'impulsions reçue, lesdites valeurs numériques ayant des poids respectifs au sein de la séquence déterminée ; et
- décider du symbole reçu en fonction de la séquence de valeurs numériques déterminée, la décision comprenant une pondération des valeurs numériques de la séquence déterminée, choisie pour rétablir les poids nominaux respectifs desdites valeurs numériques.

Ainsi, la prise de décision sur le symbole transmis est réalisée sur la base de la séquence numérique déterminée en réception. Au sein de cette séquence, les valeurs numériques peuvent avoir des poids différents, c'est-à-dire être représentées en proportions différentes, par rapport aux mêmes valeurs numériques au sein des symboles susceptibles d'être transmis. La pondération susmentionnée permet donc de rétablir les poids nominaux de ces valeurs numériques, dans le cadre de la décision sur le symbole transmis.

On améliore ainsi la décision prise, puisque les valeurs numériques sur-représentées au sein de la séquence déterminée, dont certaines correspondent forcément à des erreurs, sont pénalisées, tandis que les valeurs numériques sous-représentées, et donc plus fiables, sont favorisées dans la prise de décision.

Les valeurs numériques en question peuvent par exemple être des éléments binaires, transmis chacun à l'aide d'une impulsion de la succession d'impulsions.

De façon avantageuse, la succession d'impulsions correspondant

sensiblement à un symbole transmis depuis l'émetteur est transmise selon une séquence pseudo-aléatoire de sauts temporels, ce qui correspond à la technique dite de "Time Hopping".

Par ailleurs, la succession d'impulsions peut être modulée par décalage temporel des impulsions (modulation PPM) ou par activation ou désactivation de la transmission des impulsions (modulation OOK) par exemple.

Avantageusement, l'émetteur et le récepteur utilisent une technologie de communication radio ultra large bande, de type UWB.

Le récepteur peut être à détection synchrone. En alternative, il peut s'agir d'un récepteur non cohérent. Dans ce dernier cas, la détermination de la séquence de valeurs numériques correspondant à ladite succession d'impulsions reçue peut avantageusement comprendre une comparaison d'une énergie de chaque impulsion de la succession d'impulsions reçue avec au moins un seuil déterminé.

Il est possible de prévoir également un récepteur agencé pour détecter des symboles, chaque symbole étant transmis depuis un émetteur sous la forme d'une succession d'impulsions représentant une séquence prédéterminée de valeurs numériques, les valeurs numériques ayant des poids nominaux respectifs au sein de chaque séquence prédéterminée. Le récepteur comprend :
- des moyens pour recevoir une succession d'impulsions correspondant sensiblement à un symbole transmis depuis l'émetteur ;
- des moyens pour déterminer une séquence de valeurs numériques correspondant à ladite succession d'impulsions reçue, lesdites valeurs numériques ayant des poids respectifs au sein de la séquence déterminée ; et
- des moyens pour décider du symbole reçu en fonction de la séquence de valeurs numériques déterminée, lesdits moyens pour décider du symbole reçu comprenant des moyens pour pondérer les valeurs numériques de la séquence déterminée de façon à rétablir les poids nominaux respectifs desdites valeurs numériques.

L'invention propose en outre un produit programme d'ordinateur comprenant des instructions de code pour mettre en oeuvre le procédé susmentionné, lorsqu'il est chargé et exécuté par des moyens informatiques d'un récepteur.

L'invention propose en outre un dispositif de détection de symboles, chaque symbole étant transmis depuis un émetteur sous la forme d'une succession d'impulsions représentant une séquence prédéterminée de valeurs numériques, les valeurs numériques ayant des poids nominaux respectifs au sein de chaque séquence prédéterminée. Le dispositif de détection comprend :
- des moyens pour obtenir une succession d'impulsions correspondant sensiblement à un symbole transmis depuis l'émetteur ;
- des moyens pour déterminer une séquence de valeurs numériques correspondant à ladite succession d'impulsions obtenue, lesdites valeurs numériques ayant des poids respectifs au sein de la séquence déterminée ; et
- des moyens pour décider du symbole reçu en fonction de la séquence de valeurs numériques déterminée, lesdits moyens pour décider du symbole reçu comprenant des moyens pour pondérer les valeurs numériques de la séquence déterminée de façon à rétablir les poids nominaux respectifs desdites valeurs numériques.

Il est possible de prévoir un composant programmable pour détecter des symboles, chaque symbole étant transmis depuis un émetteur sous la forme d'une succession d'impulsions représentant une séquence prédéterminée de valeurs numériques, les valeurs numériques ayant des poids nominaux respectifs au sein de chaque séquence prédéterminée. Le composant programmable comprend :
- des moyens pour obtenir une succession d'impulsions correspondant sensiblement à un symbole transmis depuis l'émetteur ;
- des moyens pour déterminer une séquence de valeurs numériques correspondant à ladite succession d'impulsions obtenue, lesdites valeurs numériques ayant des poids respectifs au sein de la séquence déterminée ; et
- des moyens pour décider du symbole reçu en fonction de la séquence de valeurs numériques déterminée, lesdits moyens pour décider du symbole reçu comprenant des moyens pour pondérer les valeurs numériques de la séquence déterminée de façon à rétablir les poids nominaux respectifs desdites valeurs numériques.

D'autres particularités et avantages de la présente invention apparaîtront dans la description ci-après d'exemples de réalisation non limitatifs, en référence aux dessins annexés, dans lesquels :
- la figure 1 est un schéma montrant un exemple simplifié de transmission de symboles sous la forme d'impulsions ;
- la figure 2 est un schéma montrant des exemples de chaînes numériques prises en compte pour décider d'un symbole reçu.

L'invention sera décrite ci-après dans son application à un système UWB. Une telle application n'est cependant pas restrictive et l'invention peut également être mise en oeuvre dans tout autre type de système comprenant un récepteur agencé pour recevoir, depuis un émetteur correspondant, des symboles sous la forme d'une succession d'impulsions.

Une telle succession d'impulsions radio constitue un signal parfois appelé signal IR (pour "Impulse Radio"). Chaque impulsion du signal a une durée variant par exemple entre quelques centaines de picosecondes et quelques nanosecondes. On utilise généralement plusieurs impulsions pour transmettre un même symbole, ce qui permet d'obtenir un gain de répétition très appréciable. La succession d'impulsions représente ainsi une séquence prédéterminée de valeurs numériques correspondant au symbole à transmettre. Par exemple, chaque impulsion de la succession d'impulsions peut représenter une valeur numérique, typiquement un élément binaire, de la séquence. Bien sûr, d'autres représentations sont également possibles.

L'instant d'émission des impulsions n'est pas nécessairement régulier : on peut en effet faire appel à un code pseudo-aléatoire de saut temporel selon une technique dite de "Time Hopping", dont les composantes correspondent à des instants possibles d'émission. A titre d'exemple, si chaque impulsion peut être émise sur 32 emplacements différents, le code de saut sera d'ordre 32. La N-ième impulsion d'une succession d'impulsions correspondant à un symbole, avec N>1, sera émise sur l'emplacement temporel désigné par le N-ième élément du code de saut. Ainsi, on peut dire que le principe de saut temporel est, dans le temps, l'exact dual du saut de fréquence (FH) dans le spectre. De cette façon, plusieurs transmissions peuvent être multiplexées sur un même canal radio.

Par ailleurs, l'information transmise sous forme d'impulsions radio successives peut être modulée de diverses manières, de façon connue en soi. On citera par exemple la modulation PPM ("Pulse Position Modulation") dans laquelle chaque impulsion est, ou non, décalée dans le temps, en fonction de la valeur du symbole à transmettre, et la modulation OOK ("On/Off Keying") dans laquelle la transmission de chaque impulsion est activée ou, au contraire, désactivée, en fonction de la valeur du symbole à transmettre. Bien sûr, d'autres modulations sont également utilisables.

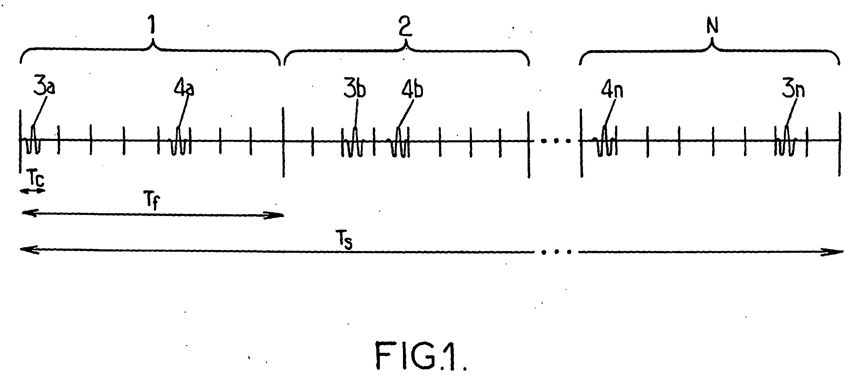

Pour illustrer ce qui précède, la figure 1 montre un exemple de transmission de symboles sous la forme d'une succession de N impulsions de courte durée. Dans cet exemple, le saut temporel est utilisé et le signal transmis est modulé en PPM.

Dans cet exemple, deux symboles sont en fait transmis par un émetteur à l'attention de deux récepteurs distincts. Ces symboles sont multiplexés dans le temps à l'aide de la technique de saut temporel mentionnée plus haut.

Le premier symbole est transmis sous la forme d'une première succession de N impulsions notées 3a, 3b,...,3n. L'impulsion 3a occupe la première tranche temporelle d'une durée 2Tc (par exemple de quelques centaines de picosecondes à quelques nanosecondes) parmi les huit tranches disponibles du premier intervalle de temps 1 d'une durée Tf (c'est-à-dire telle que Tf=8x2Tc=16Tc) ; l'impulsion 3b occupe la troisième tranche temporelle d'une durée 2Tc parmi les huit tranches disponibles du deuxième intervalle de temps 2 d'une durée Tf,..., et l'impulsion 3n occupe la septième tranche temporelle d'une durée 2Tc parmi les huit tranches disponibles du dernier intervalle de temps N d'une durée Tf. Autrement dit, le premier symbole est transmis selon un code pseudo-aléatoire de saut temporel d'ordre huit : 1, 3,..., 7.

De même, le second symbole est transmis sous la forme d'une seconde succession de N impulsions notées 4a, 4b,...,4n. L'impulsion 4a occupe la cinquième tranche temporelle d'une durée 2Tc (par exemple de quelques centaines de picosecondes à quelques nanosecondes) parmi les huit tranches disponibles du premier intervalle de temps 1 d'une durée Tf ; l'impulsion 4b occupe la quatrième tranche temporelle d'une durée 2Tc parmi les huit tranches disponibles du deuxième intervalle de temps 2 d'une durée Tf,..., et l'impulsion 4n occupe la première tranche temporelle d'une durée 2Tc parmi les huit tranches disponibles du dernier intervalle de temps N d'une durée Tf. Autrement dit, le premier symbole est transmis selon un code pseudo-aléatoire de saut temporel d'ordre huit : 5, 4,..., 1.

Chaque symbole est donc transmis à l'issue d'une durée maximale Ts = N.Tf.

Par ailleurs, dans l'exemple illustré sur la figure 1, chaque tranche temporelle est divisée en deux portions d'une durée Tc chacune et chaque impulsion est émise sur une seule portion d'une tranche temporelle. Cela s'explique par le fait que les symboles sont transmis à l'aide de la modulation PPM. Chaque valeur numérique constituant le symbole à transmettre détermine ainsi la position de la ou des impulsions correspondantes à l'intérieur des tranches temporelles respectives.

Ainsi, dans l'exemple illustré, on a considéré que l'ensemble des valeurs numériques constituant le premier symbole étaient des 0, tandis que l'ensemble des valeurs numériques constituant le second symbole étaient des 1. De ce fait, l'ensemble des impulsions 3a,3b,...,3n sont positionnées dans la première moitié des tranches temporelles respectives, et, à l'inverse, l'ensemble des impulsions 4a,4b,...,4n relatives au second symbole sont positionnées dans la seconde moitié des tranches temporelles respectives.

Bien sûr, d'autres types de transmission sont également possibles. Par exemple, si la modulation OOK avait été mise en oeuvre en remplacement de la PPM, les impulsions 4a,4b,...,4n auraient été transmises, tandis que les impulsions 3a,3b,...,3n ne l'auraient pas été.

Dans la suite de la description, on s'intéresse à la réception de symboles transmis selon les principes ci-dessus.

Une phase d'acquisition de synchronisation est tout d'abord mise en oeuvre au niveau du récepteur, en tirant parti d'une connaissance a priori de la séquence de saut temporel. Le récepteur identifie cette séquence, positionne son début dans le temps et en extrait la référence de temps recherchée, de façon connue en soi.

A partir de cet instant, le récepteur a détecté puis s'est calé sur un trajet de propagation (le canal de propagation radio pouvant présenter des trajets multiples). Il est dès lors capable de prévoir précisément les instants d'arrivée des impulsions transmises.

Le récepteur examine alors chacun de ces instants d'arrivée d'impulsions, pour détecter l'absence ou la présence effective d'une impulsion à chacun de ces instants. Cet examen comprend avantageusement une comparaison de l'amplitude du signal reçu à un seuil de décision. C'est le cas notamment lorsque le récepteur en question est de type non cohérent.

On note que dans d'autres cas, la détection des impulsions peut être réalisée par d'autres moyens. Par exemple, pour des récepteurs à détection cohérente ou par corrélation, la détection des impulsions est avantageusement une détection synchrone connue en soi.

Une décision peut ensuite être prise par le récepteur, quant à la valeur des symboles reçus, cette décision tenant compte de la détection des impulsions préalablement effectuée.

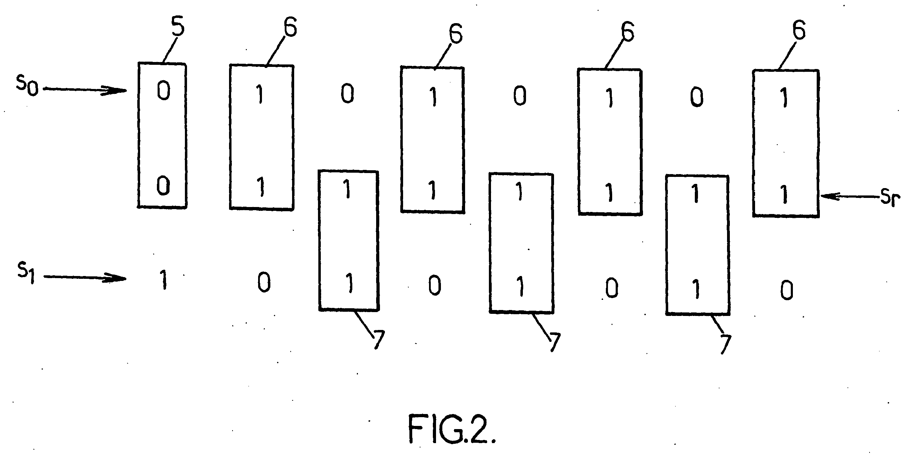

Pour illustrer la prise de décision réalisée selon la présente invention, on considère ci-après, pour simplifier, que deux symboles seulement peuvent être transmis à l'attention du récepteur. Comme illustré sur la figure 2, le premier symbole S₀ (par exemple égal à "0") est codé selon le mot de huit éléments binaires 01010101, tandis que le second symbole S₁ (par exemple égal à "1") est codé selon le mot de huit éléments binaires 10101010, chaque élément binaire faisant l'objet d'une impulsion radio respective lors de sa transmission, selon les principes décrits plus haut.

Ainsi, dans l'exemple choisi, chacun des symboles S₀ et S₁ comportent un nombre égal de 0 et 1, c'est-à-dire quatre 0 et quatre 1 chacun. Les 0 et les 1 ont donc le même poids nominal dans chacun desdits symboles, à savoir quatre chacun.

En outre, on prend l'hypothèse que ces symboles sont transmis à l'aide d'une modulation de type OOK. La transmission de chacun des symboles S₀ et S₁ consiste donc en la transmission de quatre impulsions (éléments binaires à 1) alternées avec l'absence de transmission de quatre autres impulsions (éléments binaires à 0). On comprend ainsi que chacun des symboles S₀ et S₁ possèdent la même énergie.

Traditionnellement, la décision sur le symbole transmis peut se faire, au niveau du récepteur, en comparant l'énergie reçue dans des fenêtres d'observation correspondant sensiblement à la durée d'une impulsion (Tc) à un seuil de détection, de façon à déterminer la séquence d'éléments binaires reçus, puis en comparant la séquence déterminée à la représentation des différents symboles. Dans une vision idéale où le seuil de détection serait parfaitement positionné, un temps-symbole (Ts) serait caractérisé par le fait que, selon l'exemple présenté plus haut, une impulsion serait détectée dans 50% des fenêtres, tandis qu'aucune impulsion ne serait détectée dans les 50% restants.

Un seuil de détection inadapté provoquera soit des fausses alarmes (impulsions détectées alors que les éléments binaires correspondants sont à 0), soit des détections manquées (pas d'impulsion détectée alors que les éléments binaires correspondants sont à 1).

Un seuil de détection inadapté, soit de façon permanente du fait d'un mauvais réglage initial, soit de façon temporaire par exemple en raison de variations des conditions radio, se traduira, dans l'exemple décrit, par un déséquilibre entre le nombre d'éléments binaires à 0 et le nombre d'éléments binaires à 1 détectés. En effet, les symboles S₀ et S₁ possédant autant de 0 que de 1, ces éléments binaires devraient se retrouver en même proportion dans la séquence déterminée au récepteur. On comprend ainsi que l'inadaptation du seuil biaise la détection des éléments binaires formant chaque symbole transmis et entraîne donc une mauvaise performance du récepteur dans la détermination du symbole transmis.

Selon l'invention, le déséquilibre créé, c'est-à-dire le changement de poids de chacun des éléments binaires au sein de la séquence déterminée, est compensé au niveau du récepteur. Ce dernier rétablit en effet les poids nominaux des éléments binaires pour améliorer la prise de décision sur la valeur du symbole transmis. De cette façon, même si le seuil de détection est mal choisi ou inadapté, une décision pertinente pourra être prise sur la valeur du symbole transmis.

Ce mécanisme de compensation est illustré ci-après dans un exemple décrit en référence à la figure 2. Cette figure rappelle la représentation, en éléments binaires, de chaque symbole S₀ et S₁ susceptible d'être transmis.

La séquence Sᵣ représente une succession de huit éléments binaires reçus et détectés par le récepteur considéré, suite à la transmission d'un symbole (S₀ ou S₁) par un émetteur. Cette séquence Sᵣ, à savoir 01111111, peut être comparée à chacun des symboles S₀ et S₁. On constate que Sᵣ comprend un 0 en commun (référence 5) et quatre 1 en commun (références 6) avec S₀. Par ailleurs, Sᵣ comprend trois 1 en commun (références 7) et aucun 0 en commun avec S₀.

Le récepteur, selon l'invention, applique une pondération relativement à chacun des éléments binaires 0 et 1 représentés dans la séquence Sᵣ, de façon à rétablir les poids nominaux de ces éléments binaires 0 et 1, c'est-à-dire leur proportion au sein des symboles S₀ et S₁.

Dans le présent exemple, la séquence Sᵣ comprend un seul 0 pour sept 1. Autrement dit, les poids des 0 et des 1 au sein de la séquence Sᵣ sont respectivement de 1 et 7, contre un poids nominal de 4 pour chacun d'entre eux au sein des symboles S₀ et S₁. La pondération pour rétablir les poids nominaux peut par exemple être réalisée en multipliant, dans la prise de décision, le poids des 0 et des 1 par des coefficients respectifs p₀ et p₁, tels que p₀=7xp₁=4.

Selon un exemple de prise de décision sur la base de la séquence Sᵣ déterminée au récepteur, on calcule une corrélation de Sᵣ avec S₀ et une corrélation de Sᵣ avec S₁, chaque corrélation tenant compte de la pondération susmentionnée.

Ainsi, un exemple de corrélation de Sᵣ avec S₀ peut être calculé comme suit : C₀ = 1xp₀ + 4xp₁, puisque Sᵣ possède un 0 et quatre 1 en commun avec S₀. Ainsi, en injectant les valeurs des coefficients de pondération p₀ et p₁ susmentionnées, on trouve : C₀ = 4 + 4x4/7 = 44/7. De même, la corrélation de Sᵣ avec S₁ peut être calculée comme suit : C₁ = 3xp₁, puisque Sᵣ possède uniquement trois 1 en commun avec S₁. Après calcul, on trouve : C₁ = 3x4/7 = 12/7.

Dans cet exemple, C₀ a une valeur presque quatre fois supérieure à celle de C₁. Il peut donc être décidé, avec un degré de certitude relativement élevé, que la séquence Sᵣ reçue correspond à un symbole S₀.

On note que, selon le même exemple et en l'absence de pondération, les corrélations C'₀ et C'₁ de Sᵣ avec S₀ et S₁ respectivement, auraient eu pour valeurs respectives : 5 et 3. Il aurait donc pu être décidé que le symbole reçu correspondait à S₀ même sans rétablir les poids nominaux des 0 et des 1. Toutefois, cette décision aurait été plus incertaine, puisque, dans ce cas, C'₀ a une valeur moins de deux fois supérieure à celle de C'₁.

On pourrait en outre montrer que, dans d'autres exemples, la prise de décision serait correcte en vertu des principes de l'invention décrits ci-dessus, mais incorrecte selon un mécanisme de décision classique, c'est-à-dire en l'absence de pondération des différentes valeurs numériques en jeu.

Dans l'exemple décrit ci-dessus, la prépondérance des 1 par rapport aux 0 dans la séquence Sᵣ, alors que chacun des symboles S₀ et S₁ comportaient quatre 0 et quatre 1, signifie que le seuil de détection des impulsions était trop bas. En conséquence, l'élément binaire de Sᵣ détecté à 0 est plus fiable que les éléments binaires de Sᵣ détectés à 1 dont certains sont forcément erronés. La pondération décrite plus haut permet ainsi de fiabiliser la décision, en redonnant aux éléments binaires 0 et 1, leurs poids nominaux. Cela permet en outre de compenser le seuil de détection mal positionné, sans avoir à le modifier.

La pondération peut être mise à jour pour chaque nouveau symbole reçu, ou bien de façon moins régulière éventuellement.

On comprendra que le mode de décision décrit ci-dessus constitue un simple exemple. Bien sûr, la pondération des valeurs numériques d'une séquence peut également être mise en oeuvre dans tout autre algorithme de prise de décision. De même, le type de modulation utilisé peut influer sur la façon de pondérer les valeurs numériques de manière à rétablir leurs poids nominaux.

Par ailleurs, on notera que, dans l'exemple décrit en référence à la figure 2, les symboles susceptibles d'être transmis comprenaient chacun le même nombre de 0 et de 1. La pondération en résultant visait donc à rétablir l'équilibre entre les 0 et les 1. Mais on comprendra que, même en cas de répartition non uniforme des valeurs numériques au sein des symboles susceptibles d'être transmis (par exemple, 40% de 0 et 60% de 1), la pondération choisie devra permettre de rétablir, pour chaque valeur numérique de la séquence déterminée, les poids nominaux (c'est-à-dire, par exemple, 40% de 0 et 60% de 1).

Les opérations décrites ci-dessus sont mises en oeuvre au niveau d'un récepteur. Avantageusement, certaines au moins d'entre elles sont réalisées à l'aide d'un programme d'ordinateur comprenant des instructions adéquates, le programme d'ordinateur pouvant être chargé et exécuté sur un récepteur.

Les opérations décrites ci-dessus peuvent éventuellement être mises en oeuvre par un dispositif de détection, qui peut prendre la forme d'un module matériel ou logiciel, et qui peut être intégré dans un récepteur.

En variante, les opérations peuvent être mises en oeuvre par un composant programmable, tel qu'un processeur de signal numérique ou DSP ("Digital Signal Processor") par exemple, qui peut être intégré dans un récepteur.

Un important avantage de la présente invention est que les performances du récepteur en termes de détection de symboles sont conservées, même lorsque les conditions radio ont varié en cours de communication. En outre, la compensation numérique, matérialisée par la pondération des valeurs numériques, ne nécessite pas de modification des récepteurs au niveau matériel. Au niveau logiciel, les opérations numériques à mettre en outre sont relativement légères. Enfin, cette amélioration de la décision au niveau du récepteur n'a aucun impact sur l'émission.

Comme indiqué plus haut, la présente invention est particulièrement intéressante dans le cas des récepteurs non cohérents, dans lesquels le positionnement optimal du seuil de détection est particulièrement délicat. Toutefois, elle est également applicable à tout autre type de récepteurs, tels que les récepteurs à détection cohérente ou par corrélation.

## Revendications

1. Procédé de détection de symboles par un récepteur, chaque symbole (S₀,S₁) étant transmis depuis un émetteur sous la forme d'une succession d'impulsions (3a,3b,...,3n ; 4a,4b,...,4n) représentant une séquence prédéterminée de valeurs numériques, les valeurs numériques ayant des poids nominaux respectifs au sein de chaque séquence prédéterminée, le procédé comprenant les étapes suivantes :
- recevoir, au récepteur, une succession d'impulsions correspondant sensiblement à un symbole transmis (S₀,S₁) depuis l'émetteur ;
**caractérisé en ce que** le procédé comprend en outre :
- déterminer une séquence de valeurs numériques (Sᵣ) correspondant à ladite succession d'impulsions reçue, lesdites valeurs numériques ayant des poids respectifs au sein de la séquence déterminée ; et
- décider du symbole reçu en fonction de la séquence de valeurs numériques déterminée, la décision comprenant une pondération des valeurs numériques de la séquence déterminée, choisie pour rétablir les poids nominaux respectifs desdites valeurs numériques.

2. Procédé selon la revendication 1, dans lequel ladite succession d'impulsions correspondant sensiblement à un symbole transmis depuis l'émetteur est transmise selon une séquence pseudo-aléatoire de sauts temporels.

3. Procédé selon la revendication 1 ou 2, dans lequel ladite succession d'impulsions correspondant sensiblement à un symbole transmis depuis l'émetteur est modulée par décalage temporel des impulsions.

4. Procédé selon l'une quelconque des revendications précédentes, dans lequel ladite succession d'impulsions correspondant sensiblement à un symbole transmis depuis l'émetteur est modulée par activation ou désactivation de la transmission des impulsions.

5. Procédé selon l'une quelconque des revendications précédentes, dans lequel chaque impulsion (3a,3b,...,3n ; 4a,4b,...,4n) de ladite succession d'impulsions correspondant sensiblement à un symbole transmis depuis l'émetteur a une durée (Tc) comprise entre quelques centaines de picosecondes et quelques nanosecondes.

6. Procédé selon l'une quelconque des revendications précédentes, dans lequel l'émetteur et le récepteur utilisent une technologie de communication radio ultra large bande.

7. Procédé selon l'une quelconque des revendications précédentes, dans lequel la détermination de la séquence de valeurs numériques (Sᵣ) correspondant à ladite succession d'impulsions reçue comprend une comparaison d'une énergie de chaque impulsion (3a,3b,...,3n ; 4a,4b,...,4n) de la succession d'impulsions reçue avec au moins un seuil déterminé.

8. Procédé selon l'une quelconque des revendications précédentes, dans lequel la décision du symbole reçu comprend le calcul d'une corrélation de la séquence de valeurs numériques déterminée (Sᵣ) avec chacun des symboles (S₀,S₁) susceptibles d'être transmis depuis l'émetteur, et la détermination du symbole correspondant à la meilleure corrélation, et dans lequel le calcul de corrélation comprend un comptage des valeurs numériques communes (5-7) entre la séquence de valeurs numériques déterminée et chacun des symboles susceptibles d'être transmis depuis l'émetteur, ledit comptage appliquant en outre des coefficients de pondération respectifs pour les valeurs numériques, de façon à rétablir les poids nominaux respectifs desdites valeurs numériques.

9. Produit programme d'ordinateur comprenant des instructions de code pour mettre en oeuvre le procédé selon l'une quelconque des revendications 1 à 8, lorsqu'il est chargé et exécuté par des moyens informatiques d'un récepteur.

10. Dispositif de détection de symboles, chaque symbole (S₀,S₁) étant transmis depuis un émetteur sous la forme d'une succession d'impulsions (3a,3b,...,3n ; 4a,4b,...,4n) représentant une séquence prédéterminée de valeurs numériques, les valeurs numériques ayant des poids nominaux respectifs au sein de chaque séquence prédéterminée, le dispositif de détection comprenant :
- des moyens pour obtenir une succession d'impulsions correspondant sensiblement à un symbole transmis (S₀,S₁) depuis l'émetteur ;
**caractérisé en ce que** le dispositif de détection comprend en outre :
- des moyens pour déterminer une séquence de valeurs numériques (Sᵣ) correspondant à ladite succession d'impulsions obtenue, lesdites valeurs numériques ayant des poids respectifs au sein de la séquence déterminée ; et
- des moyens pour décider du symbole reçu en fonction de la séquence de valeurs numériques déterminée, lesdits moyens pour décider du symbole reçu comprenant des moyens pour pondérer les valeurs numériques de la séquence déterminée de façon à rétablir les poids nominaux respectifs desdites valeurs numériques.

## Patentansprüche

1. Verfahren zur Detektion von Symbolen durch einen Empfänger, wobei jedes Symbol (S₀, S₁) von einem Sender in der Form einer Folge von Impulsen (3a, 3b, ..., 3n; 4a, 4b, ..., 4n) gesendet wird, die eine vorherbestimmte Sequenz von numerischen Werten darstellt, wobei die numerischen Werte jeweilige Nenngewichte innerhalb jeder vorherbestimmten Sequenz aufweisen, wobei das Verfahren die folgenden Schritte umfasst:
- Empfangen, am Empfänger, einer Folge von Impulsen, die im Wesentlichen einem Symbol (S₀, S₁) entspricht, das von dem Sender gesendet wird;
**dadurch gekennzeichnet, dass** das Verfahren ferner umfasst:
- Bestimmen einer Sequenz (Sr) numerischer Werte, die der empfangenen Folge von Impulsen entspricht, wobei die numerischen Werte jeweilige Gewichte innerhalb der bestimmten Sequenz aufweisen; und
- Entscheiden des empfangenen Symbols entsprechend der bestimmten Sequenz numerischer Werte, wobei die Entscheidung eine Gewichtung der numerischen Werte der bestimmten Sequenz umfasst, die gewählt wird, um die jeweiligen Nenngewichte der numerischen Werte wiederherzustellen.

2. Verfahren nach Anspruch 1,
wobei die Folge von Impulsen, die im Wesentlichen einem von dem Sender gesendeten Symbol entspricht, in einer pseudo-aleatorischen Sequenz von Zeitsprüngen gesendet wird.

3. Verfahren nach Anspruch 1 oder 2,
wobei die Folge von Impulsen, die im Wesentlichen einem von dem Sender gesendeten Symbol entspricht, durch einen Zeitversatz von Impulsen moduliert wird.

4. Verfahren nach einem der vorhergehenden Ansprüche,
wobei die Folge von Impulsen, die im Wesentlichen einem von dem Sender gesendeten Symbol entspricht, durch eine Aktivierung oder Deaktivierung der Transmission der Impulse moduliert wird.

5. Verfahren nach einem der vorhergehenden Ansprüche,
wobei jeder Impuls (3a, 3b, ..., 3n; 4a, 4b, ..., 4n) der Folge von Impulsen, die im Wesentlichen einem von dem Sender gesendeten Symbol entspricht, eine Dauer (Tc) zwischen einigen hundert Pikosekunden und einigen Nanosekunden aufweist.

6. Verfahren nach einem der vorhergehenden Ansprüche,
wobei der Sender und der Empfänger eine Technologie der Ultrabreitband-Funkkommunikation verwenden.

7. Verfahren nach einem der vorhergehenden Ansprüche,
wobei die Bestimmung der Sequenz (Sᵣ) numerischer Werte, die der empfangenen Folge von Impulsen entspricht, einen Vergleich einer Energie jedes Impulses (3a, 3b, ..., 3n; 4a, 4b, ..., 4n) der empfangenen Folge von Impulsen mit mindestens einer bestimmten Schwelle umfasst.

8. Verfahren nach einem der vorhergehenden Ansprüche,
wobei die Entscheidung des empfangenen Symbols die Berechnung einer Korrelation der bestimmten Sequenz (Sᵣ) numerischer Werte mit jedem der Symbole (S₀, S₁), die von dem Sender gesendet werden können, und die Bestimmung des Symbols, das der besten Korrelation entspricht, umfasst, und wobei die Berechnung der Korrelation eine Berechnung gemeinsamer numerischer Werte (5-7) zwischen der bestimmten Sequenz numerischer Werte und jedem der Symbole, die von dem Sender gesendet werden können, umfasst, wobei die Berechnung außerdem jeweilige Gewichtungskoeffizienten für die numerischen Werte anwendet, um die jeweiligen Nenngewichte der numerischen Werte wiederherzustellen.

9. Computerprogrammprodukt, umfassend Codeinstruktionen zur Durchführung des Verfahrens nach einem der Ansprüche 1 bis 8, wenn dieses durch Informatikmittel eines Empfängers geladen und ausgeführt wird.

10. Vorrichtung zur Detektion von Symbolen, wobei jedes Symbol (S₀, S₁) von einem Sender in der Form einer Folge von Impulsen (3a, 3b, ..., 3n; 4a, 4b, ..., 4n) gesendet wird, die eine vorherbestimmte Sequenz von numerischen Werten darstellt, wobei die numerischen Werte jeweilige Nenngewichte innerhalb jeder vorherbestimmten Sequenz aufweisen, wobei die Detektionsvorrichtung umfasst:
- Mittel zum Erhalten einer Folge von Impulsen, die im Wesentlichen einem Symbol (S₀, S₁) entspricht, das von dem Sender gesendet wird;
**dadurch gekennzeichnet, dass** die Detektionsvorrichtung ferner umfasst:
- Mittel zum Bestimmen einer Sequenz (Sᵣ) numerischer Werte, die der erhaltenen Folge von Impulsen entspricht, wobei die numerischen Werte jeweilige Gewichte innerhalb der bestimmten Sequenz aufweisen; und
- Mittel zum Entscheiden des empfangenen Symbols entsprechend der bestimmten Sequenz numerischer Werte, wobei die Mittel zum Entscheiden des empfangenen Symbols Mittel zum Gewichten der numerischen Werte der bestimmten Sequenz umfassen, um die jeweiligen Nenngewichte der numerischen Werte wiederherzustellen.

## Claims

1. Method for detection of symbols by a receiver, each symbol (S₀,S₁) being transmitted from a transmitter in the form of a succession of pulses (3a,3b,...,3n ; 4a,4b,...,4n) representing a predetermined sequence of digital values, the digital values having respective nominal weights within each predetermined sequence, the method comprising the following steps:
- receiving, at the receiver, a succession of pulses substantially corresponding to a symbol (S₀,S₁) transmitted from the transmitter;
**characterized in that** the method further comprises:
- determining a sequence of digital values (Sᵣ) corresponding to said received succession of pulses, said digital values having respective weights within the given sequence; and
- deciding on the symbol received as a function of the given sequence of digital values, the decision comprising a weighting of the digital values of the given sequence, chosen so as to restore the respective nominal weights of said digital values.

2. Method according to Claim 1, in which said succession of pulses substantially corresponding to a symbol transmitted from the transmitter is transmitted according to a pseudo-random sequence of time hops.

3. Method according to either of Claims 1 and 2, in which said succession of pulses substantially corresponding to a symbol transmitted from the transmitter is modulated by time shifting of the pulses.

4. Method according to any one of the preceding claims, in which said succession of pulses substantially corresponding to a symbol transmitted from the transmitter is modulated by enabling or disabling the transmission of the pulses.

5. Method according to any one of the preceding claims, in which each pulse (3a,3b,...,3n ; 4a,4b,...,4n) from said succession of pulses substantially corresponding to a symbol transmitted from the transmitter has a duration (Tc) in the range between a few hundreds of picoseconds and a few nanoseconds.

6. Method according to any one of the preceding claims, in which the transmitter and the receiver use an ultra-wide-band radio communications technology.

7. Method according to any one of the preceding claims, in which the determination of the sequence of digital values (Sᵣ) corresponding to said received succession of pulses comprises a comparison of the energy of each pulse (3a,3b,...,3n ; 4a,4b,...,4n) from the received succession of pulses with at least one given threshold.

8. Method according to any one of the preceding claims, in which the decision on the symbol received comprises the calculation of a correlation of the sequence of given digital values (Sᵣ) with each of the symbols (S₀,S₁) able to be transmitted from the transmitter, and the determination of the symbol corresponding to the best correlation, and in which the correlation calculation comprises a counting operation of the common digital values (5-7) between the given sequence of digital values and each of the symbols able to be transmitted from the transmitter, said counting operation also applying respective weighting coefficients for the digital values, in such a manner as to restore the respective nominal weights of said digital values.

9. Computer program product comprising code instructions for implementing the method according to any one of Claims 1 to 8, when it is loaded and executed by computer processing means of a receiver.

10. Device for detection of symbols, each symbol (S₀S₁) being transmitted from a transmitter in the form of a succession of pulses (3a,3b,...,3n ; 4a,4b,...,4n) representing a predetermined sequence of digital values, the digital values having respective nominal weights within each predetermined sequence, the detection device comprising:
- means for obtaining a succession of pulses substantially corresponding to a symbol (S₀,S₁) transmitted from the transmitter;
**characterized in that** the detection device further comprises:
- means for determining a sequence of digital values (Sᵣ) corresponding to said received succession of pulses, said digital values having respective weights within the given sequence; and
- means for deciding on the symbol received as a function of the given sequence of digital values, said means for deciding on the symbol received comprising means for weighting of the digital values of the given sequence, so as to restore the respective nominal weights of said digital values.
